# FASCICULE DE BREVET EUROPEEN

(11) **EP 2 034 819 B1**
(45) Date de publication et mention de la délivrance du brevet: **13.02.2013**
(21) Numéro de dépôt: 07803817.1
(22) Date de dépôt: 29.06.2007
(51) Int. Cl.: A01M 21/04, B05B 1/30

(54) **APPAREIL DE PULVERISATION MANUELLE ET LOCALISEE**
VORRICHTUNG FÜR MANUELLE LOKALE PULVERISIERUNG
APPARATUS FOR MANUAL, LOCALIZED PULVERIZATION

(30) Priorité: 30.06.2006 FR 0652748
(43) Date de publication de la demande: 18.03.2009
(73) Titulaire: EXEL INDUSTRIES, 51200 Epernay (FR)
(72) Inventeur: BALLU, Patrick, F-51100 Reims (FR)
(74) Mandataire: Myon, Gérard Jean-Pierre
(86) Numéro de dépôt international: PCT/FR2007/001108
(87) Numéro de publication internationale: WO 2008/000970

(56) Documents cités:
- EP-A- 0 084 486
- DE-C- 831 784
- FR-A1- 2 623 374

## Description

La présente invention se rapporte à un appareil de pulvérisation manuelle et localisée.

On connaît du document FR 2 519 844, en accord avec le préambule de la revendication 1, un appareil de pulvérisation manuelle et localisée se présentant sous la forme d'une canne, comprenant un réservoir tubulaire apte à recevoir un liquide phytosanitaire, un pommeau de préhension monté sur une extrémité de ce réservoir, un ensemble de pulvérisation monté en communication de fluide sur l'autre extrémité de ce réservoir et comprenant des moyens de pulvérisation, des moyens d'appui dudit ensemble de pulvérisation sur le sol, et des moyens de mise à l'air dudit réservoir.

Dans cet appareil de la technique antérieure, les moyens de mise à l'air du réservoir comprennent un orifice formé dans le pommeau.

Cet orifice permet d'éviter la formation d'une dépression à l'intérieur du réservoir tubulaire, laquelle dépression nuirait au bon fonctionnement de la pulvérisation étant donné que le liquide phytosanitaire passe par simple gravité du réservoir à l'ensemble de pulvérisation.

Outre le fait que cet orifice risque d'être bouché par la main de l'utilisateur, du liquide phytosanitaire risque de s'échapper par cet orifice lorsque l'appareil est positionné horizontalement ou à l'envers, c'est-à-dire avec le pommeau vers le bas et l'ensemble de pulvérisation vers le haut.

La présente invention a notamment pour but de fournir un appareil de pulvérisation du type susmentionné qui ne présente pas les inconvénients qui viennent d'être décrits.

On atteint ce but de l'invention avec un appareil de pulvérisation manuelle et localisée, comprenant un réservoir tubulaire apte à recevoir un liquide phytosanitaire, un pommeau de préhension monté sur une extrémité de ce réservoir, un ensemble de pulvérisation monté en communication de fluide sur l'autre extrémité de ce réservoir et comprenant des moyens de pulvérisation, des moyens d'appui dudit ensemble de pulvérisation sur le sol, et des moyens de mise à l'air dudit réservoir, remarquable en ce que lesdits moyens de mise à l'air comprennent une soupape actionnable du seul fait de la préhension dudit pommeau par un utilisateur et mobile entre une position de fermeture empêchant la communication dudit réservoir avec l'extérieur, et une position d'ouverture autorisant une telle communication, des moyens élastiques étant prévus pour rappeler ladite soupape vers sa position de fermeture.

Grâce à la présence de la soupape affleurante, la mise à l'air du réservoir est automatiquement effectuée lorsque l'utilisateur saisit le pommeau et appuie dessus afin d'effectuer les opérations de pulvérisation.

La circulation d'air peut s'effectuer tout autour de la périphérie de la soupape, de sorte qu'il n'y a plus de risque d'obturation de la mise à l'air par la main de l'utilisateur.

De plus, en cas de renversement de l'appareil de pulvérisation, le rappel élastique de la soupape vers sa position de fermeture garantit que le liquide phytosanitaire situé dans le réservoir ne pourra pas s'échapper vers l'extérieur.

Suivant d'autres caractéristiques optionnelles de l'appareil de pulvérisation selon l'invention :
- ladite soupape est montée de manière affleurante sur ledit pommeau,
- ladite soupape est montée de manière recouvrante sur ledit pommeau,
- cet appareil comprend des moyens pour verrouiller ladite soupape dans sa position de fermeture,
- ledit pommeau comprend une première partie montée sur ledit réservoir, et une deuxième partie pouvant être déconnectée de ladite première partie,
- ladite soupape est montée dans ladite deuxième partie,
- ladite première partie présente une forme d'entonnoir,
- ledit pommeau comporte un oeillet d'accrochage,
- ledit ensemble de pulvérisation comprend une chambre en communication de fluide avec lesdits moyens de pulvérisation, un piston solidaire dudit réservoir et mobile à l'intérieur de ladite chambre, ce piston étant adapté pour chasser le liquide phytosanitaire se trouvant dans ladite chambre vers lesdits moyens de pulvérisation, puis pour mettre en communication de fluide ladite chambre avec ledit réservoir, cet appareil étant remarquable en ce qu'il comprend une bague de réglage de la course dudit piston,
- cet appareil comprend une position de réglage de ladite bague dans laquelle la course dudit piston est sensiblement nulle,
- cet appareil comprend une fenêtre de visualisation de l'état de réglage de ladite bague,
- cet appareil comprend des moyens pour empêcher l'échappement de ladite bague de réglage en fin de course de réglage,
- lesdits moyens de pulvérisation comprennent une buse à jet réglable,
- lesdits moyens d'appui comprennent une jupe transparente,
- lesdits moyens de pulvérisation et lesdits moyens d'appui sont remplaçables respectivement par d'autres moyens de pulvérisation aptes à produire des jets de formes différentes, et par d'autres moyens d'appui de formes différentes adaptées aux formes desdits jets.

D'autres caractéristiques et avantages de la présente invention apparaîtront à la lumière de la description qui va suivre et à l'examen des dessins annexés dans lesquels :
- la figure 1 est une vue en élévation d'un appareil de pulvérisation selon la présente invention,
- la figure 2 est une vue en perspective du pommeau de cet appareil,
- la figure 3 est une vue en perspective des deux parties formant ce pommeau, ces deux parties ayant été désolidarisées l'une de l'autre,
- la figure 4 est une vue en coupe axiale de ce pommeau à l'état libre,
- la figure 5 est une vue analogue à celle de la figure 4 de ce pommeau lorsqu'il est pris par la main d'un utilisateur,
- la figure 6 est une vue en perspective de l'ensemble de pulvérisation de l'appareil selon l'invention,
- la figure 7 est une vue en coupe axiale de cet ensemble de pulvérisation positionné sur une plante à traiter et se trouvant dans un état libre, et
- la figure 8 est une vue analogue à la figure 7 de cet ensemble de pulvérisation, un effort de pression vers le bas étant exercé sur le pommeau par un utilisateur afin de traiter ladite plante.

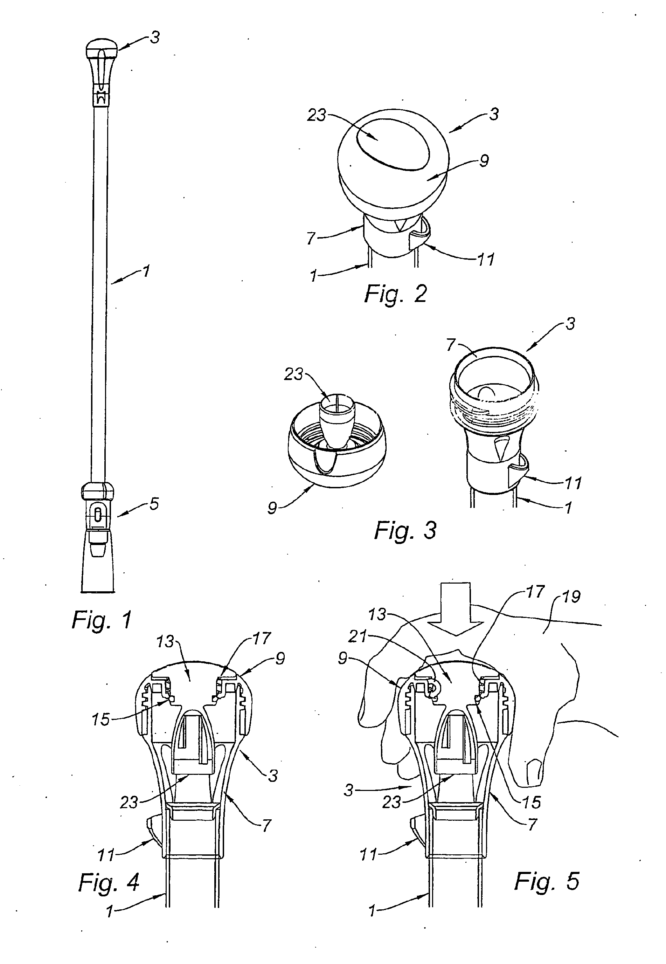

On se reporte à présent à la figure 1 sur laquelle on peut voir que l'appareil de pulvérisation selon l'invention comprend un réservoir tubulaire 1, de préférence transparent et gradué, destiné à recevoir un liquide phytosanitaire.

A son extrémité supérieure, ce réservoir comporte un pommeau de préhension 3.

A son extrémité inférieure, ce réservoir comporte un ensemble de pulvérisation 5.

On se reporte à présente aux figures 2 à 5, sur lesquelles on a représenté de manière plus détaillée le pommeau 3.

Comme on peut le voir notamment sur la figure 3, le pommeau 3 comprend en fait une première partie 7 montée sur le réservoir 1, et une deuxième partie 9 conçue pour être fixée par vissage sur la première partie 7.

Comme cela est visible notamment sur les figures 4 et 5, la première partie 7 présente une forme évasée et comporte à sa périphérie un oeillet de fixation 11.

La deuxième partie 9 comporte quant à elle une soupape montée affleurante sur cette deuxième partie entre une position de fermeture visible sur la figure 4 et une position d'ouverture visible sur la figure 5.

La soupape 13 comporte à sa périphérie un joint torique 15 assurant une liaison étanche de cette soupape avec la deuxième partie 9 lorsque cette soupape se trouve en position de fermeture.

D'autre part, des moyens élastiques, tel qu'un ressort hélicoïdal 17, assurent le rappel de la soupape 13 vers sa position de fermeture représentée à la figure 4.

Comme cela est visible sur la figure 5, lorsqu'un utilisateur prend avec sa main 19 le pommeau 3, il exerce spontanément sur la soupape 13 un effort de pression qui écarte le joint torique de son siège et permet ainsi la circulation d'air (voir flèche 21) entre l'extérieur et l'intérieur du pommeau 3, qui lui-même communique avec l'intérieur du réservoir 1.

On notera que l'on peut avantageusement prévoir une coupelle de dosage 23 solidaire de la soupape 13, disposée de manière que lorsque la deuxième partie 9 du pommeau est dévissée de la première partie 7 de ce pommeau (voir figure 3), cette coupelle puisse être utilisée pour doser du produit phytosanitaire destiné à être versé à l'intérieur du réservoir tubulaire 1.

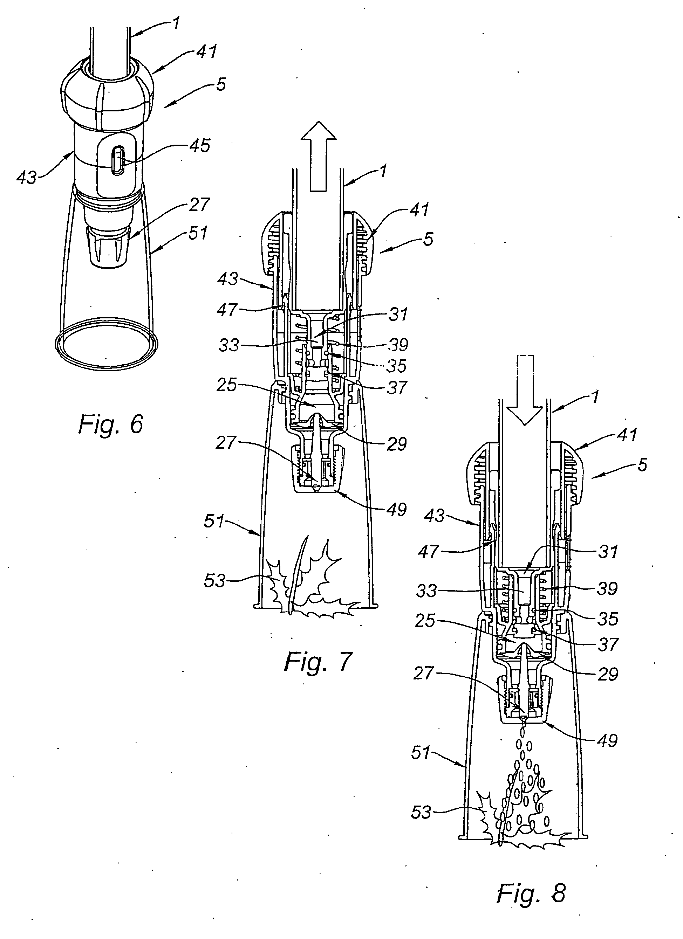

On se reporte à présent aux figures 6 à 8 sur lesquelles on a représenté l'ensemble de pulvérisation 5 de l'appareil selon l'invention.

Comme on peut le voir sur ces figures, cet ensemble de pulvérisation comprend une chambre 25 en communication de fluide avec une buse 27, un clapet anti-goutte en matériau élastomère 29 étant interposé entre cette chambre et cette buse.

Un piston 31 solidaire du réservoir tubulaire 1 est monté coulissant à l'intérieur de la chambre 25. Ce piston comporte une partie creuse 33 débouchant d'une part à l'intérieur du réservoir 1 et d'autre part à la périphérie de ce piston, entre un joint torique classique 35 et un joint torique flottant 37.

Comme cela est expliqué dans le document FR 2 519 844, le joint torique flottant 37 empêche la communication de fluide entre la chambre 25 et la partie creuse 33 du piston 31 lorsque ce piston est poussé en direction de la buse 27, et autorise une telle communication de fluide lorsque ce piston se déplace en s'éloignant de cette buse.

Des moyens élastiques 39 tel qu'un ressort hélicoïdal tendent à éloigner le piston 31, et donc le réservoir tubulaire 1, de la buse 27.

L'ensemble de pulvérisation 5 comprend également une bague de réglage 41 montée par vissage sur le corps 43 de cet ensemble et formant butée pour la course de l'ensemble comprenant le réservoir tubulaire 1 et le piston 31.

Comme cela est visible notamment sur la figure 6, une fenêtre 45 formée dans le corps 43 permet de visualiser le degré de vissage de la bague 41 sur ce corps.

Cette fenêtre peut comporter des inscriptions telles que « Max » et « Min », correspondant respectivement à des courses maximale et minimale du réservoir tubulaire 1 et du piston 31 à l'intérieur du corps 43, ainsi qu'un cadenas indiquant un degré de vissage auquel correspond une course nulle de ce réservoir et de ce piston.

On notera également que l'on peut avantageusement prévoir des moyens de clipsage 47 de la bague 41 sur le corps 43 de manière à éviter que cette bague puisse s'échapper de ce corps en positon de dévissage extrême.

On peut aussi prévoir de manière avantageuse une bague de réglage 49 sur la buse 27, permettant de modifier la forme du jet de cette buse (jet droit / jet conique par exemple).

Selon une autre caractéristique avantageuse de l'appareil selon l'invention, cet appareil peut prendre appui sur le sol par l'intermédiaire d'une jupe 51 formée dans un matériau transparent.

On peut avantageusement prévoir que des jupes de formes différentes (oblongues...) soient adaptables sur le corps 43.

Dans ce cas, on prévoit également un jeu de buses adaptables sur le corps 43, permettant d'engendrer des jets de formes différentes correspondant aux formes des jupes.

Le fait de pouvoir utiliser ces différentes combinaisons de jupes et de buses permet de traiter des plantes réparties différemment dans l'espace.

A titre d'exemple, la combinaison d'une jupe oblongue avec une buse produisant un jet plat sera particulièrement adaptée au traitement de mauvaises herbes poussant linéairement entre les dalles d'une terrasse.

Le mode de fonctionnement et les avantages de l'appareil selon l'invention résultent directement de la description qui précède.

Lorsqu'un utilisateur saisit le pommeau 3, et en particulier lorsqu'il appuie sur ce pommeau en vue d'effectuer une opération de pulvérisation, il appuie spontanément sur la soupape 13, permettant ainsi la mise à l'air du réservoir tubulaire1, et ainsi le bon fonctionnement de l'ensemble de pulvérisation 5.

Lorsque l'utilisateur relâche le pommeau 3, la soupape 13 est rappelée dans sa position étanche, ce qui permet d'éviter tout risque de renversement vers l'extérieur du liquide phytosanitaire situé à l'intérieur du réservoir tubulaire 1, notamment lorsque l'appareil est renversé.

La présence de la coupelle de dosage 23 facilite les opérations de dosage de produit phytosanitaire destiné à être versé à l'intérieur du réservoir tubulaire 1.

La forme évasée de la première partie 7 du pommeau 3 facilite l'introduction de ce produit à l'intérieur de ce réservoir.

L'oeillet de fixation 11 permet avantageusement de fixer l'appareil en position verticale sur un support en dehors des périodes d'utilisation.

Lorsque l'utilisateur souhaite traiter une plante 53 (voir figures 7 et 8) il commence par positionner la jupe 51 autour de cette plante, et exerce un effort de pression vers le bas sur le pommeau 3.

Le réservoir tubulaire 1 et le piston 31 passent ainsi de la position représentée à la figure 7 à la position représentée à la figure 8, permettant d'envoyer le liquide phytosanitaire situé à l'intérieur de la chambre 25 à travers la buse 27 à l'encontre du clapet 29.

Le liquide phytosanitaire situé à l'intérieur de la chambre 25 est ainsi pulvérisé sur la plante 53, comme cela est représenté à la figure 8.

Lorsque l'utilisateur lâche le pommeau 3, le réservoir tubulaire 1 et le piston 31 repassent de la position représentée à la figure 8 à celle représentée à la figure 7, sous l'effet de la force de rappel exercé par le ressort 39.

Ce faisant et grâce à la présence du joint flottant 37, le liquide situé à l'intérieur du réservoir tubulaire 1 circule à l'intérieur de la partie creuse 33 du piston 31 et vient remplir la chambre 25 dans laquelle il se tiendra jusqu'à la prochaine opération de pulvérisation, le clapet 29 empêchant ce liquide de s'écouler vers la buse 27.

Le fait de prévoir une bague 41 pour régler la course de l'ensemble formé par le réservoir tubulaire 1 et le piston 31 permet de régler à volonté le volume de liquide phytosanitaire envoyé sur la plante à traiter lors de chaque opération de pulvérisation.

Le fait de pouvoir même bloquer totalement cette course et de neutraliser ainsi le fonctionnement du pulvérisateur permet d'obtenir une sécurité notamment vis-à-vis des enfants.

Le fait de prévoir une buse 27 à jet réglable est particulièrement commode lorsqu'il s'agit de traiter des plantes de natures différentes, plus ou moins étalées sur le sol.

Le fait de prévoir une jupe simple transparente 51 permet d'empêcher l'échappement du liquide pulvérisé en dehors de la zone de traitement, tout en assurant une parfaite visualisation de cette zone par l'utilisateur.

Bien entendu, la présente invention n'est nullement limitée à l'exemple qui vient d'être décrit fourni à titre illustratif et non limitatif.

C'est ainsi par exemple qu'au lieu de prévoir une soupape montée affleurante sur le pommeau, on pourrait aussi envisager une soupape montée de manière recouvrante sur ce pommeau, de sorte qu'une préhension de ce pommeau par un utilisateur entraîne nécessairement un effort de pression sur cette soupape.

C'est ainsi également que l'on peut envisager des moyens permettant de verrouiller la soupape en position de fermeture : à titre d'exemple, on peut envisager un verrou à baïonnette, dans lequel le blocage/déblocage de la soupape peut s'effectuer en faisant pivoter cette soupape par rapport au pommeau.

La présence de tels moyens de verrouillage permet par exemple de vendre la canne de désherbage pré-remplie avec du liquide phytosanitaire sans qu'il y ait de risque d'échappement de ce liquide par suite d'un effort exercé malencontreusement sur la soupape.

## Revendications

1. Appareil de pulvérisation manuelle et localisée, comprenant un réservoir tubulaire (1) apte à recevoir un liquide phytosanitaire, un pommeau de préhension (3) monté sur une extrémité de ce réservoir, un ensemble de pulvérisation (5) monté en communication de fluide sur l'autre extrémité de ce réservoir et comprenant des moyens de pulvérisation (27), des moyens d'appui (51) dudit ensemble de pulvérisation (5) sur le sol, et des moyens de mise à l'air dudit réservoir, **caractérisé en ce que** lesdits moyens de mise à l'air comprennent une soupape (13) actionnable du seul fait de la préhension dudit pommeau (3) par un utilisateur et mobile entre une position de fermeture empêchant la communication dudit réservoir (1) avec l'extérieur, et une position d'ouverture autorisant une telle communication, des moyens élastiques (17) étant prévus pour rappeler ladite soupape (18) vers sa position de fermeture.

2. Appareil selon la revendication 1, **caractérisé en ce que** ladite soupape (13) est montée de manière affleurante sur ledit pommeau (3).

3. Appareil selon la revendication 1, **caractérisé en ce que** ladite soupape est montée de manière recouvrante sur ledit pommeau (3).

4. Appareil selon l'une quelconque des revendications précédentes, **caractérisé en ce qu'**il comprend des moyens pour verrouiller ladite soupape (13) dans sa position de fermeture.

5. Appareil selon l'une des quelconque des revendications précédentes, **caractérisé en ce que** ledit pommeau (3) comprend une première partie (7) montée sur ledit réservoir (1), et une deuxième partie (9) pouvant être déconnectée de ladite première partie (7).

6. Appareil selon la revendication 5, **caractérisé en ce que** ladite soupape (13) est montée dans ladite deuxième partie (9).

7. Appareil selon l'une des revendications 5 ou 6, **caractérisé en ce que** ladite première partie (7) présente une forme d'entonnoir.

8. Appareil selon l'une quelconque des revendications précédentes, **caractérisé en ce que** ledit pommeau (3) comporte un oeillet d'accrochage (11).

9. Appareil selon l'une quelconque des revendications précédentes, dans lequel ledit ensemble de pulvérisation (5) comprend une chambre (25) en communication de fluide avec lesdits moyens de pulvérisation (27), un piston (31) solidaire dudit réservoir (1) et mobile à l'intérieur de ladite chambre (25), ce piston (31) étant adapté pour chasser le liquide phytosanitaire se trouvant dans ladite chambre (25) vers lesdits moyens de pulvérisation (27), puis pour mettre en communication de fluide ladite chambre (25) avec ledit réservoir (1), cet appareil étant **caractérisé en ce qu'**il comprend une bague (41) de réglage de la course dudit piston (31).

10. Appareil selon la revendication 9, **caractérisé en ce qu'**il comprend une position de réglage de ladite bague (41) dans laquelle la course dudit piston (31) est sensiblement nulle.

11. Appareil selon l'une des revendications 9 ou 10, **caractérisé en ce qu'**il comprend une fenêtre (45) de visualisation de l'état de réglage de ladite bague (41).

12. Appareil selon l'une quelconque des revendications 9 à 11, **caractérisé en ce qu'**il comprend des moyens (47) pour empêcher l'échappement de ladite bague de réglage (41) en fin de course de réglage.

13. Appareil selon l'une quelconque des revendications précédentes, **caractérisé en ce que** lesdits moyens de pulvérisation comprennent une buse à jet réglable (27).

14. Appareil selon l'une quelconque des revendications précédentes, **caractérisé en ce que** lesdits moyens d'appui (51) comprennent une jupe transparente.

15. Appareil selon l'une quelconque des revendications précédentes, **caractérisé en ce que** lesdits moyens d'appui (51) comprennent des jupes de formes différentes adaptables sur un corps (43), et **en ce que** lesdits moyens de pulvérisation comprennent un jeu de buses adaptables sur ledit corps (43), permettant d'engendrer des jets de formes différentes correspondant aux formes desdites jupes.

## Claims

1. An apparatus for manual and localized spraying, said apparatus comprising a tubular reservoir (1) suitable for receiving a plant treatment liquid, a gripping knob (3) mounted on one end of said reservoir, a spray assembly (5) mounted in fluid communication on the other end of said reservoir and comprising spray means (27) and means for supporting (51) said spray assembly (5) on the ground, and vent means for connecting said reservoir to the atmosphere, said apparatus being **characterized in that** said vent means comprise a valve (13) configured to be actuated merely by a user gripping said knob (3), said valve (13) being movable between a closed position preventing communication between said reservoir (1) and the outside, and an open position allowing said communication, resilient means (17) being provided for urging said valve (13) towards its closed position.

2. An apparatus according to claim 1, **characterized in that** said valve (13) is mounted flush on said knob (3).

3. An apparatus according to claim 1, **characterized in that** said valve (13) is mounted so as to cover said knob (3).

4. An apparatus according to any preceding claim, **characterized in that** it comprises means for locking said valve (13) in its closed position.

5. An apparatus according to any preceding claim, **characterized in that** said knob (3) comprises a first portion (7) mounted on said reservoir (1), and a second portion (9) that can be separated from said first portion (7).

6. An apparatus according to claim 5, **characterized in that** said valve (13) is mounted in said second portion (9).

7. An apparatus according to claim 5 or 6, **characterized in that** said first portion (7) is funnel-shaped.

8. An apparatus according to any preceding claim, **characterized in that** said knob (3) includes a fastener eyelet (11).

9. An apparatus according to any preceding claim, wherein said spray assembly (5) comprises a chamber (25) in fluid communication with said spray means (27), and a piston (31) secured to said reservoir (1) and movable inside said chamber (25), said piston (31) being adapted to expel the plant treatment liquid that is to be found in said chamber (25) towards said spray means (27), and then to put said chamber (25) into fluid communication with said reservoir (1), said apparatus being **characterized in that** it comprises a ring (41) for adjusting the stroke of said piston (31).

10. An apparatus according to claim 9, **characterized in that** it comprises an adjustment position for said ring (41) in which the stroke of said piston (31) is substantially zero.

11. An apparatus according to claim 9 or 10, **characterized in that** it comprises a window (45) for viewing the adjustment state of said ring (41).

12. An apparatus according to any one of claims 9 to 11, **characterized in that** it comprises means (47) for preventing said adjustment ring (41) from escaping at the end of the adjustment stroke.

13. An apparatus according to any preceding claim, **characterized in that** said spray means comprise an adjustable jet nozzle (27).

14. An apparatus according to any preceding claim, **characterized in that** said means (51) for supporting comprise a transparent skirt.

15. An apparatus according to any preceding claim, **characterized in that** said means for supporting (51) comprise a plurality of skirts of different shapes suitable for fitting on a body (43), and **in that** said spray means comprise a set of nozzles suitable for fitting on said body (43), so as to generate jets of different shapes corresponding to the shapes of said skirts.

## Patentansprüche

1. Gerät zur manuellen und lokalen Zerstäubung, umfassend einen röhrenförmigen Behälter (1), der eine Pflanzenschutzflüssigkeit aufnehmen kann, einen Greifknopf (3), der an einem Ende dieses Behälters befestigt ist, eine Zerstäubungseinheit (5), die in Fluidverbindung am anderen Ende dieses Behälters befestigt ist und Zerstäubungsmittel (27) umfasst, Mittel (51) zum Aufstellen der Zerstäubungseinheit (5) auf dem Boden und Mittel zur Belüftung des Behälters, **dadurch gekennzeichnet, dass** die Belüftungsmittel ein Ventil (13) umfassen, das nur durch das Ergreifen des Knopfes (3) durch einen Benutzer betätigbar ist und zwischen einer Verschlussposition, die die Verbindung des Behälters (1) mit außen verhindert, und einer Öffnungsposition, die eine solche Verbindung gestattet, beweglich ist, wobei elastische Mittel (17) vorgesehen sind, um das Ventil (13) wieder in seine Verschlussposition zu bringen.

2. Gerät nach Anspruch 1, **dadurch gekennzeichnet, dass** das Ventil (13) an den Knopf (3) anliegend montiert ist.

3. Gerät nach Anspruch 1, dass das Ventil den Knopf (3) überdeckend montiert ist.

4. Gerät nach einem der vorhergehenden Ansprüche, **dadurch gekennzeichnet, dass** es Mittel umfasst, um das Ventil (13} in seiner Verschlussposition zu verriegeln.

5. Gerät nach einem der vorhergehenden Ansprüche, **dadurch gekennzeichnet, dass** der Knopf (3) einen ersten Teil (7), der auf dem Behälter (1) montiert ist, und einen zweiten Teil (9) umfasst, der vom ersten Teil (7) getrennt werden kann.

6. Gerät nach Anspruch 5, **dadurch gekennzeichnet, dass** das Ventil (13) in dem zweiten Teil (9) montiert ist.

7. Gerät nach einem der Ansprüche 5 oder 6, **dadurch gekennzeichnet, dass** der erste Teil (7) eine Trichterform aufweist.

8. Gerät nach einem der vorhergehenden Ansprüche, **dadurch gekennzeichnet, dass** der Knopf (3) eine Befestigungsöse (11) umfasst.

9. Gerät nach einem der vorhergehenden Ansprüche, bei dem die Zerstäubungseinheit (5) eine Kammer (25), die in Fluidverbindung mit den Zerstäubungsmitteln (27) steht, einen Kolben (31), der mit dem Behälter (1) verbunden und im Inneren der Kammer (25) beweglich ist, umfasst, wobei dieser Kolben (31) dazu geeignet ist, die Pflanzenschutzflüssigkeit, die sich in der Kammer (25) befindet, zu den Zerstäubungsmitteln (27) zu treiben, dann die Kammer (25) mit dem Behälter (1) in Fluidverbindung zu bringen, wobei dieses Gerät **dadurch gekennzeichnet ist, dass** es einen Ring (41) zur Einstellung des Hubs des Kolbens (31) umfasst.

10. Gerät nach Anspruch 9, **dadurch gekennzeichnet, dass** es eine Einstellposition des Ringes (41) umfasst, in der der hub des Kolbens (31) im Wesentlichen gleich Null ist.

11. Gerät nach einem der Ansprüche 9 oder 10, **dadurch gekennzeichnet, dass** es ein Sichtfenster (45) für den Einstellzustand des Ringes (41) umfasst.

12. Gerät nach einem der Ansprüche 9 bis 11, **dadurch gekennzeichnet, dass** es Mittel (47) umfasst, um das Austreten des Einstellringes (41) am Einstellanschlag zu verhindern.

13. Gerät nach einem der vorhergehenden Ansprüche, **dadurch gekennzeichnet, dass** die Zerstäubungsmittel eine Düse (27) mit einstellbarem Strahl umfassen.

14. Gerät nach einem der vorhergehenden Ansprüche, **dadurch gekennzeichnet, dass** die Aufstellmittel (51) eine transparente Schürze umfassen.

15. Gerät nach einem der vorhergehenden Ansprüche, **dadurch gekennzeichnet, dass** die Aufstellmittel (51) Schürzen unterschiedlicher Formen umfassen, die an einen Körper (43) angepasst werden können, und dass die Zerstäubungsmittel einen Satz von Düsen umfassen, die an den Körper (43) angepasst werden können und es ermöglichen, Strahlen unterschiedlicher Formen entsprechend den Formen der Schürzen zu erzeugen.
